# EUROPEAN PATENT SPECIFICATION

(11) **EP 3 255 177 B1**
(45) Date of publication and mention of the grant of the patent: **29.07.2020**
(21) Application number: 16746614.3
(22) Date of filing: 02.02.2016
(51) Int. Cl.: C23C 22/00, C23C 22/34, C23C 22/36, H01F 1/18, C21D 8/12, C21D 9/46, C22C 38/00, C22C 38/38, C22C 38/02, B05D 7/14, B05D 3/02, C22C 38/04, C22C 38/06, C09D 5/00, C09D 7/40, C08L 33/00

(54) **ELECTRICAL STEEL SHEET**
ELEKTRISCHES STAHLBLECH
FEUILLE D'ACIER ÉLECTRIQUE

(30) Priority: 05.02.2015 JP 2015021081
(43) Date of publication of application: 13.12.2017
(73) Proprietor: Nippon Steel Corporation, Tokyo 100-8071 (JP)
(72) Inventor: TAKEDA, Kazutoshi, Tokyo 100-8071 (JP); KOSUGE, Kenji, Tokyo 100-8071 (JP); TAKASE, Tatsuya, Tokyo 100-8071 (JP); MUNEDA, Koji, Tokyo 100-8071 (JP)
(74) Representative: J A Kemp LLP
(86) International application number: PCT/JP2016/053041
(87) International publication number: WO 2016/125783

(56) References cited:
- WO-A1-2012/011442
- WO-A1-2012/057168
- JP-A- 2001 220 683
- US-A1- 2003 175 524
- US-A1- 2009 032 144
- US-A1- 2013 115 443
- US-A1- 2013 209 789

## Description

### TECHNICAL FIELD

The present invention relates to an electrical steel sheet.

### BACKGROUND ART

In general, when electrical apparatus such as a motor and a transformer is to be produced using an electrical steel sheet, firstly a coiled electrical steel sheet is blanked into a predetermined shape, and then the blanked electrical steel sheets are laminated to form an iron core and a copper wire is wound around the teeth and others of the iron core. Subsequently, a terminal for copper wire connection, a flange, and others are attached to the iron core after it is subjected to impregnation with a varnish and other processes, and then the iron core is secured to a casing. In this manner, motors, transformers, and others are produced.

For iron core production processes as described above, there is a recent trend toward eliminating the securement of the iron core to a casing but instead applying, to the outside of the laminated iron core, a powder coating, an electrodeposition coating, or an aqueous coating so as to enhance corrosion resistance and durability.

Powder coating is a type of coating applied by electrostatically depositing, onto an iron core, a coating powder dispersed in powdered form and then drying and curing the coating so as to coat the iron core entirely. Electrodeposition coating is a type of coating applied by electrically depositing, onto an iron core, coating particles dispersed in water and then drying and curing the coating so as to coat the iron core entirely. Aqueous coating is a type of coating applied by depositing a coating solution onto an iron core by spraying of the coating solution or immersion in the coating solution and then drying and curing the coating so as to coat the iron core entirely.

With regard to powder coating, electrodeposition coating, aqueous coating, or other coatings, there is a possibility that rust may occur in a gap between the coating and the iron core if adhesion between the coating and the iron core is low, and therefore adhesion with the iron core is important.

The upper and lower surfaces of the laminated iron core are constituted by surfaces of a surface-treated steel sheet, whereas the side surface portions of the laminated iron core are constituted by the steel itself, which has been exposed by blanking, and therefore have different properties from those of the upper and lower surfaces of the iron core.

In general, electrical steel sheets are provided with an insulating coating on the surface to reduce eddy current loss. The insulating coating needs to have good coating properties in terms of not only insulating properties but also corrosion resistance, adhesion with the steel sheet, punchability, and thermal resistance.

As is known, such insulating coatings are typically formed from a constituent based on a salt such as a chromate salt and a phosphate salt, an oxide such as colloidal silica and mica, an organic resin such as an acrylic resin and an epoxy resin, and a mixture thereof.

Examples of technologies related to the insulating coating of an electrical steel sheet are as follows. JP50-15013, listed below, discloses a technique for forming an insulating coating using a treatment solution based on a bichromate salt and an emulsion of an organic resin such as a vinyl acetate-acrylic resin copolymer, a butadiene-styrene copolymer, or an acrylic resin. JP03-36284, listed below, discloses a technique for forming an insulating coating using a treatment solution including a chromic acid aqueous solution, an emulsion type resin, and an organic reducing agent, and further including a readily soluble aluminum compound, an oxide or another compound of a divalent metal (Me), and H₃BO₃, wherein, in the chromic acid solution, the molar ratio of Me²⁺ to Al³⁺ ranges from 0 to 7.0, the molar ratio of (Al³⁺ + Me²⁺) to CrO₃ ranges from 0.2 to 0.5, and the molar ratio of H₃BO₃ to CrO₃ ranges from 0.1 to 1.5.

In recent years, with increasing awareness of environmental issues, technologies have been developed for forming an insulating coating without using an aqueous solution of a chromium compound containing hexavalent chromium. Examples of such technologies are as follows. JP06-330338, listed below, discloses a technique for mixing, at a specific ratio, a phosphate salt having a specific composition, at least one selected from a boric acid and colloidal silica, and an emulsion of an organic resin having a specific particle size, and baking the mixture onto a steel sheet. This technique uses a treatment solution free of a chromium compound but can achieve good coating properties comparable to those of conventional chromium compound-containing insulating coatings, and in addition, can retain excellent slipperiness after stress relief annealing.

JP09-323066, listed below, discloses an electrical steel sheet having, on the surface, an insulating coating containing an ethylene-unsaturated carboxylic acid copolymer, an epoxy resin, a silane coupling agent, and silica at a specific ratio.

JP2002-309379, listed below, discloses an electrical steel sheet for blanking having excellent slipperiness and adhesion. This electrical steel sheet includes a top layer coating free of a chromium compound and which contains 40 to 90% by mass of a fluorocarbon resin, and an organic resin. JP2002-309379 also discloses that the fluorocarbon resin contained in the top layer coating is polytetrafluoroethylene, and the organic resin contained in the top layer coating is one selected from, or a mixture of two or more selected from a polyethersulfone resin, a polyphenylenesulfide resin, polyetherketone, and a polysulfone resin.

With regard to fluorocarbon resins, JP05-98207 discloses a technique related to an aqueous coating composition containing a fluorine-containing copolymer. This fluorine-containing copolymer is a copolymer of a fluoroolefin and an ethylenically unsaturated compound, and includes 30 to 70% of fluoroolefin-based units. The fluorine-containing copolymer has a hydroxyl value of 30 to 200 mg KOH/g, an acid number of 2 to 200 mg KOH/g, and a number average molecular weight of 3000 to 40000.

JP07-41913 discloses a technique related to an electrical steel sheet including an insulating coating formed of a phosphate salt and an organic resin. WO 2012/57168 and US 2013/209789 discloses a technique for forming an insulating coating with good adhesion to an electrical steel sheet by mixing, at a specific ratio, a copolymer of a fluoroolefin and an ethylenically unsaturated compound with a mixture of a metal phosphate and an acrylic resin, an epoxy resin, or a polyester resin, having a specific particle size.

WO 2012/011442 and US 2013/115443 discloses a technique related to an electrical steel sheet provided with an insulating coating including a first component, which includes a metal phosphate and an acrylic resin, an epoxy resin, or a polyester resin, or a mixture or a copolymer thereof, having a specific particle size, and a second component, which includes a dispersion or a powder of a fluorocarbon resin having a specific particle size.

### LIST OF PRIOR ART DOCUMENTS

### PATENT DOCUMENT

Patent Document 1: JP50-15013
Patent Document 2: JP03-36284
Patent Document 3: JP06-330338
Patent Document 4: JP09-323066
Patent Document 5: JP2002-309379
Patent Document 6: JP05-98207
Patent Document 7: JP07-41913
Patent Document 8: WO 2012/57168
Patent Document 9: WO 2012/011442

### SUMMARY OF INVENTION

### TECHNICAL PROBLEM

In production processes for iron cores for electrical apparatus, it is necessary that good adhesion be ensured for powder coating, electrodeposition coating, and aqueous coating, and also necessary that the side surfaces of the lamination of the iron core and the upper and lower steel sheet surface portions of the iron core have comparable coating compatibilities.

However, in conventional electrical steel sheets formed using the techniques disclosed in JP50-15013, JP03-36284, JP06-330338, JP09-323066, JP2002-309379, JP05-98207, JP07-41913, WO 2012/57168, and, WO 2012/011442, mentioned above, there are differences between the coating compatibilities of the insulating coatings and the coating compatibilities of the metal exposed side surface portions of the laminations. This can result in an extremely thin thickness of a coating on the insulating coating portions, which leads to a low corrosion resistance, or can result in an extremely large thickness of a coating on the side surfaces of the laminations, which leads to a low adhesion, and furthermore can result in non-uniformity of the coating on the insulating coating portions, which leads to the occurrence of uneven coating, and even further, can result in failure to produce practically any corrosion resistance improvement effect of powder coating, electrodeposition coating, or aqueous coating.

Furthermore, when the insulating coating on the surface of an electrical steel sheet is formed using a high molecular weight fluorocarbon resin as a base component, as disclosed in JP2002-309379, JP05-98207, and WO 2012/011442 described above, problems arise, for example, of high costs and low adhesion of a coating after blanking. In addition, high molecular weight fluorocarbon resins have poor dispersibility. Thus, there is a problem in that stirring for a long time causes the fluorocarbon resin to form large clusters and this results in non-uniform concentration of the fluorocarbon resin in the surface of the insulating coating.

The present invention has been made in view of the problems described above, and accordingly, an object of the present invention is to provide an electrical steel sheet having improved coating compatibility and improved corrosion resistance in wet environments and also having good coating properties in terms of, for example, insulating properties, adhesion, appearance, and thermal resistance.

### SOLUTION TO PROBLEM

The present inventors have solved the problems described above by including a low molecular weight fluorine-containing compound in the base component of the insulating coating. The gist thereof lies in the electrical steel sheet set forth below.
(1) An electrical steel sheet having an insulating coating on a steel sheet surface, wherein the insulating coating comprises one or more selected from an inorganic salt, an oxide and an organic resin, wherein
   the insulating coating contains, based on a total mass of the insulating coating, 50% or more by mass in total of: the inorganic salt and/or the oxide,
   contains a fluorine-containing compound, which has a molecular weight of not more than 100,000 in an amount of 0.3 to 50 parts by mass based on 100 parts by mass of the total solid content of an inorganic material, an oxide, and an organic resin,
   the fluorine-containing compound being one or more selected from the group consisting of chlorotrifluoroethylene low polymers, perfluoropolyether low polymers, perfluoroalkyl polyether low polymers, fluorine-modified silicones, vinylidene fluoride-tetrafluoroethylene copolymers, vinylidene fluoride-hexafluoropropylene copolymers, and vinylidene fluoride-hexafluoropropylene-tetrafluoroethylene copolymers,
   has a fluorine concentration ranging from 2 ppm to 130 ppm, and
   is free of a chromium compound.
(2) The electrical steel sheet according to the item (1), wherein the insulating coating contains, based on a total mass of the insulating coating, 50% or more by mass in total of: a metal phosphate, and; one selected from, or a mixture or a copolymer of two or more selected from an acrylic resin, an epoxy resin, and a polyester resin.
(3) The electrical steel sheet according to the item (1), wherein the insulating coating contains, based on a total mass of the insulating coating, 50% or more by mass in total of: the oxide, and; one selected from, or a mixture or a copolymer of two or more selected from an acrylic resin, an epoxy resin, and a polyester resin.
(4) The electrical steel sheet according to the item (2), wherein the insulating coating contains, based on a total mass of the insulating coating, 50% or more by mass in total of:
   100 parts by mass of the metal phosphate including one or more metal elements selected from aluminum, zinc, calcium, cobalt, strontium, zirconium, titanium, nickel, barium, magnesium and manganese, and;
   1 to 50 parts by mass of one selected from, or a mixture or a copolymer of two or more selected from the acrylic resin, the epoxy resin, and the polyester resin.
(5) The electrical steel sheet according to the item (3), wherein the insulating coating contains, based on a total mass of the insulating coating, 50% or more by mass in total of:
   100 parts by mass of the oxide including one or more selected from colloidal silica, zinc oxide, calcium oxide, cobalt oxide, zirconium oxide, titanium oxide and magnesium oxide and;
   1 to 100 parts by mass of one selected from, or a mixture or a copolymer of two or more selected from the acrylic resin, the epoxy resin, and the polyester resin.

### ADVANTAGEOUS EFFECTS OF INVENTION

As described above, in the present invention, a specific fluorine concentration is given to the insulating coating that contains 50% or more by mass in total of an inorganic salt and/or an oxide based on the total mass of the insulating coating or contains 50% or more by mass in total of a metal phosphate and an organic resin based on the total mass of the insulating coating. By this means, the present invention provides an electrical steel sheet having an insulating coating that shows good coating compatibility for electrodeposition coating, powder coating, and aqueous coating and also shows good properties in terms of corrosion resistance in wet environments, insulating properties, adhesion, appearance, thermal resistance, and other properties.

### DESCRIPTION OF EMBODIMENTS

A specific embodiment of the present invention will be described.

The present invention relates to an electrical steel sheet that can be used as a material for iron cores of, for example, electrical apparatus. In particular, the present invention relates to an electrical steel sheet including an insulating coating that is free of a chromium compound and showing good insulating properties, adhesion, and corrosion resistance in wet environments, and also having suitable coating compatibility.

An electrical steel sheet according to the present embodiment has, on the steel sheet surface, an insulating coating that is free of a chromium compound and in which the fluorine concentration ranges from 2 ppm to 130 ppm. The insulating coating includes, for example, a mixture of an inorganic salt and/or an oxide in an amount of 50% or more by mass in total based on the total mass of the insulating coating, or includes, for example, a metal phosphate and an organic resin, such as an acrylic resin, an epoxy resin, and a polyester resin, in an amount of 50% or more by mass in total based on the total mass of the insulating coating.

Firstly, the following description is given of an electrical steel sheet on which the insulating coating is formed in the present embodiment.

In the present embodiment, a suitable example of the electrical steel sheet on which the insulating coating is formed may be a non-oriented electrical steel sheet that at least contains, by mass%, Si: 0.1% or more and less than 4.0% and Al: 0.05% or more and less than 3.0%, with the balance being Fe and impurities. Si increases electrical resistance and improves magnetic properties with the increase in its content, but since Si decreases rollability, the content is preferably less than 4.0% by mass. Likewise, Al improves magnetic properties with the increase in its content, but since Al decreases rellability, the content is preferably less than 3.0% by mass. The electrical steel sheet used in the present embodiment may further contain elements other than Si and Al, such as Mn, Sn, Cr, and P, in an amount ranging from 0.01% by mass to 3.0% by mass. The electrical steel sheet used in the present embodiment may contain further additional elements such as S, N, and C in an amount of less than 100 ppm, preferably in an amount of less than 20 ppm.

In the present embodiment, an electrical steel sheet for use may be formed, for example, by heating a slab having the steel composition described above to 1000 to 1250°C, hot-rolling the slab and winding it into a coil, annealing as necessary the sheet in the as-hot-rolled condition within a temperature range of 800°C to 1050°C, thereafter cold rolling the sheet to 0.15 to 0.5 mm, and further annealing the sheet at 750 to 1100°C.

The surface of the electrical steel sheet, on which the insulating coating is to be formed, may be subjected to an optional pretreatment prior to application of a treatment solution described below. Examples of the pretreatment include degreasing treatments using an alkali or the like and pickling treatments using a hydrochloric acid, a sulfuric acid, a phosphoric acid or the like. The surface of the electrical steel sheet, prior to application of the treatment solution described below, may not be subjected to any of such pretreatments but may be the surface in the as-finish-annealed condition.

Next, described below is the insulating coating to be formed on the surface of the electrical steel sheet in the present embodiment.

In the present embodiment, the inorganic salt to be included in the insulating coating is a salt that contains an acid such as sulfuric acid, nitric acid, or carbonic acid and metal ions in an amount of 50% or more by mass in total based on the total mass of the inorganic salt. Specific examples of the inorganic salt include strontium sulfate, aluminum sulfate, magnesium sulfate, calcium sulfate, aluminum nitrate, iron nitrate, zirconium carbonate, a double salt of zirconium carbonate and ammonium carbonate, barium carbonate, magnesium carbonate, zinc oxide, calcium oxide, zirconium oxide, magnesium oxide, titanium oxide, and cobalt oxide. Specific examples of the oxide to be included in the insulating coating include metal oxides, silica, and alumina, and more specific examples include colloidal silica, zinc oxide, calcium oxide, cobalt oxide, zirconium oxide, titanium oxide, and magnesium oxide.

The inorganic salts and the oxides may each be used alone or in combination as a mixture of two or more.

In the present embodiment, there are no particular limitations on the type of phosphoric acid to be included in the metal phosphate that is included in the insulating coating, but orthophosphoric acid, metaphosphoric acid, and polyphosphoric acid, for example, are preferred. The metal ions to be included in the metal phosphate described above are preferably ions of Li, Al, Mg, Ca, Sr, Ti, Ni, Mn, Co, Zn, Zr, or Ba for example, more preferably ions of Al, Zn, Ca, Co, Sr, Zr, Ti, Ni, Ba, Mg, or Mn, and even more preferably ions of Al, Ca, Mn, or Ni. Preparation of a solution of the metal phosphate is preferably carried out, for example, by mixing an oxide, a carbonate, or a hydroxide of the above-mentioned metal ions with a phosphoric acid such as orthophosphoric acid and preparing the solution.

The metal phosphate may be used as a single phosphate or as a mixture of two or more phosphates. Furthermore, an additive such as a phosphonic acid or a boric acid may also be used with the metal phosphate.

In the present embodiment, among the specific examples of the oxide to be included in the insulating coating, the colloidal silica may be, for example, a colloidal silica having an average particle size of 5 to 40 nm and a Na content of 0.5% or less by mass. The Na content more suitably ranges from 0.01 to 0.3% by mass.

As used in the present embodiment, the average particle size of the colloidal silica and the average particle sizes of the organic resins to be described below are number average values (number average particle sizes) of the diameters of the primary particles provided that the particle shapes approximate spheres. The average particle size of the colloidal silica can be measured by the nitrogen adsorption method for example, and the average particle sizes of the organic resins can be measured by laser diffractometry for example.

According to the present embodiment, it is necessary that the fluorine concentration in the insulating coating range from 2 to 130 ppm. The fluorine concentration in the insulating coating is preferably not less than 5 ppm, and more preferably not less than 8 ppm. Furthermore, the fluorine concentration in the insulating coating is preferably not more than 100 ppm, and more preferably not more than 50 ppm, and particularly preferably not more than 30 ppm.

There are no particular limitations on the method for measuring the fluorine concentration in the insulating coating, but ion chromatography may be suitably used, for example. If an interfering element is present among the components of the insulating coating, a high sensitivity measurement method, such as the combination of ion chromatography and the lanthanum alizarin complexone method as disclosed in JP7-198704 may be used, for example. By the use of these analysis methods, accurate quantitative determination of the fluorine concentration in the insulating coating can be made.

The present invention provides, for example, an electrical steel sheet with a thin insulating coating on the surface, with the coating containing a mixture of an inorganic salt and/or an oxide in an amount of 50% or more by mass in total based on the total mass of the coating, and with the fluorine concentration in the coating being within the specific range of 2 to 130 ppm. Furthermore, the present invention provides, for example, an electrical steel sheet with a thin insulating coating on the surface, with the coating containing a metal phosphate and an organic resin in an amount of 50% or more by mass in total based on the total mass of the coating, and with the fluorine concentration in the coating being within the specific range of 2 to 130 ppm. The thicknesses of these insulating coatings preferably range from 0.3 to 3.0 µm, and more preferably range from 0.5 to 1.5 µm.

In the present embodiment, the acrylic resin, the epoxy resin, and the polyester resin that can be included in the insulating coating may each be a commercially available resin emulsion.

The acrylic resin may be a resin formed from a monomer such as methyl acrylate, ethyl acrylate, n-butyl acrylate, i-butyl acrylate, n-octyl acrylate, i-octyl acrylate, 2-ethylhexyl acrylate, n-nonyl acrylate, n-decyl acrylate, and n-dodecyl acrylate, or more suitably may be a resin formed by copolymerizing the monomer with a functional group-containing monomer such as acrylic acid, methacrylic acid, maleic acid, maleic anhydride, fumaric acid, crotonic acid, and itaconic acid or with a hydroxyl group-containing monomer such as 2-hydroxyethyl (meth)acrylate, 2-hydroxypropyl (meth)acrylate, 3-hydroxybutyl (meth)acrylate, and 2-hydroxyethyl (meth)allyl ether.

The epoxy resin may be a resin formed by, for example, reacting an amine-modified epoxy resin with a carboxylic acid anhydride. Specifically, the epoxy resin may suitably be a resin formed by modifying an epoxy resin of, for example, bisphenol A diglycidyl ether, a ring-opened caprolactone adduct of bisphenol A diglycidyl ether, bisphenol F diglycidyl ether, bisphenol S diglycidyl ether, novolac glycidyl ether, or dimer acid glycidyl ether, with an amine such as isopropanolamine, monopropanolamine, monobutanolamine, monoethanolamine, diethylenetriamine, ethylenediamine, butalamine, propylamine, isophoronediamine, tetrahydrofurfurylamine, xylenediamine, hexylamine, nonylamine, triethylenetetramine, tetramethylenepentamine, and diaminodiphenyl sulfone, and reacting the modified resin with a carboxylic acid anhydride such as succinic anhydride, itaconic anhydride, maleic anhydride, citraconic anhydride, phthalic anhydride, and trimellitic anhydride.

The polyester resin may suitably be a polyester resin formed by reacting a dicarboxylic acid with a glycol. Examples of the dicarboxylic acid include terephthalic acid, isophthalic acid, orthophthalic acid, naphthalene dicarboxylic acid, biphenyl dicarboxylic acid, succinic acid, adipic acid, sebacic acid, fumaric acid, maleic acid, maleic anhydride, itaconic acid, and citraconic acid, and examples of the glycol include ethylene glycol, 1,2-propylenglycol, 1,3-propanediol, 1,4-butanediol, 1,5-pentanediol, neopentyldiol, 1,6-hexanediol, triethylene glycol, dipropylene glycol, and polyethylene glycol. Furthermore, the polyester resins described above may be graft polymerized with, for example, acrylic acid, methacrylic acid, maleic acid, fumaric acid, itaconic acid, citraconic acid, or methacrylic acid anhydride, and the resultant resins may be used.

The emulsion of the organic resin may be an emulsion of one of the above-mentioned organic resins or may be an emulsion of a mixture of two or more of the above-mentioned organic resins. The emulsion of the organic resin preferably has an average particle size of 0.05 to 0.50 µm. If the average particle size is less than 0.05 µm, the organic resin tends to agglomerate in the treatment solution and this may reduce the uniformity of the insulating coating. Thus, such an average particle size is not preferred. If the average particle size is more than 0.50 µm, the stability of the treatment solution may decrease, and therefore such an average particle size is not preferred. More preferably, the average particle size of the emulsion of the organic resin ranges from 0.1 to 0.3 µm.

In the case where a metal phosphate and one or more organic resins selected from an acrylic resin, an epoxy resin, and a polyester resin are to be included in the insulating coating, the mixing ratio of the organic resin preferably ranges from 1 to 50 parts by mass based on 100 parts by mass of the metal phosphate. If the mixing ratio of the organic resin is less than 1 part by mass, the concentration of the organic resin is extremely low, which likely causes agglomeration of the organic resin and may result in low stability of the treatment solution. Thus, such a mixing ratio is not preferred. If the mixing ratio of the organic resin is more than 50 parts by mass, the thermal resistance of the insulating coating may decrease, and therefore such a mixing ratio is not preferred. More preferably, the mixing ratio of the organic resin ranges from 6 to 25 parts by mass based on 100 parts by mass of the metal phosphate.

In the case where an oxide such as colloidal silica and one or more organic resins selected from an acrylic resin, an epoxy resin, and a polyester resin are to be mixed into the insulating coating, the mixing ratio of the organic resin preferably ranges from 1 to 100 parts by mass based on 100 parts by mass of the oxide. If the mixing ratio of the organic resin is less than 1 part by mass, the film forming properties for the insulating coating are poor and chalking may occur on the insulating coating. Thus, such a mixing ratio is not preferred. If the mixing ratio of the organic resin is more than 100 parts by mass, the thermal resistance of the insulating coating may decrease, and therefore such a mixing ratio is not preferred. More preferably, the mixing ratio of the organic resin ranges from 5 to 80 parts by mass based on 100 parts by mass of the oxide.

The insulating coating of the electrical steel sheet according to the present embodiment is to contain fluorine at a concentration of 2 to 130 ppm. To accomplish this, a fluorine-containing compound, for example, is added to the insulating coating. Suitable examples of the fluorine-containing compound are low molecular weight fluorine compounds and fluorocarbon rubbers, each in emulsion form, finely dispersed in an aqueous solution. When a water-soluble fluorine-containing compound is used, the fluorine-containing compound may be simply added and mixed without emulsification in an appropriate manner.

An example of the low molecular weight fluorine compound is a fluorocarbon oil. Examples of the fluorocarbon oil are chlorotrifluoroethylene low polymers, perfluoropolyether low polymers, perfluoroalkyl polyether low polymers, fluorine-modified silicones.

Suitable examples of the fluorocarbon rubber are vinylidene fluoride-tetrafluoroethylene copolymers, vinylidene fluoride-hexafluoropropylene copolymers, and vinylidene fluoride-hexafluoropropylene-tetrafluoroethylene copolymers.

The low molecular weight fluorine compound and the fluorocarbon rubber, and their copolymers described above refer to relatively low molecular weight compounds, i.e., so-called oligomer compounds, among fluorine-containing compounds. The molecular weights of the low molecular weight compound, the fluorocarbon rubber, and their copolymers are preferably not less than 200 and more preferably not less than 1,000, and are not more than 100,000 and preferably not more than 20,000. The low molecular weight fluorine compound, the fluorocarbon rubber, and their copolymers may be used alone, or a mixture of two or more of them, with different functional groups and/or different molecular weights for example, may be used.

Among the above-mentioned fluorine-containing compounds, water soluble compounds may be directly mixed with the treatment solution. However, the fluorocarbon rubber may preferably be emulsified using, for example, a fluorochemical surfactant before being mixed with the treatment solution. The particle size for emulsification is not particularly limited but, for example, it is suitably within a range of 0.05 to 0.50 µm, and more suitably within a range of 0.05 to 0.20 µm. If the particle size of the primary particles is less than 0.05 µm, the fluorine-containing compound tends to agglomerate in the solution, which can decrease the stability of the solution, and therefore such a particle size is not preferred. If the particle size of the primary particles is more than 0.50 µm, the formed insulating coating is prone to delamination and may have chalking, and therefore such a particle size is not preferred. In particular, decreased solution stability is not preferred because it can cause agglomerations in the solution and the agglomerations may clog the pipe or pump or may be included in the insulating coating to cause coating defects. On the other hand, if the particle size of the primary particles is not more than 0.20 µm, the resulting insulating coating will likely have a good appearance, and therefore such a particle size is more preferred. Specifically, the particle size of the fluorine-containing compound when it is in emulsion form is a number average particle size and can be measured, for example, in accordance with a JIS method (JIS Z8825-1) using a commercially available laser diffraction/scattering particle size distribution analyzer.

The mixing ratio of the fluorine-containing compound and the material that forms the base component of the insulating coating (one selected from, or a mixture of two or more selected from an inorganic material, an oxide, and an organic resin, or a metal phosphate and an organic resin) is not particularly limited as long as the predetermined fluorine concentration is achieved. Suitably, the fluorine-containing compound is mixed with the insulating coating in an amount of 0.3 to 50 parts by mass based on 100 parts by mass of the solids content of the material that forms the base component of the insulating coating. A mixing ratio of the fluorine-containing compound of less than 0.3 parts by mass is not preferred because it may lead to non-uniform distribution of fluorine in the insulating coating, and a mixing ratio of the fluorine-containing compound of more than 50 parts by mass is not preferred because it results in formation of some high fluorine concentration portions in the insulating coating, which may decrease the coating compatibility. More preferably, the mixing ratio of the fluorine-containing compound ranges from 0.5 to 5 parts by mass based on 100 parts by mass of the solids content of the material that forms the base component of the insulating coating. Herein, by "base component" is meant that the component is contained in an amount of 50% by mass or more based on the total mass of the insulating coating.

In the present embodiment, it is also possible to add, to the insulating coating, a component other than the above-described material that forms the base component of the insulating coating and the fluorine-containing compound. For example, low molecular weight organic compounds of, for example, polyol, cellosolve, carboxylic acids, ethers, or esters, may further be included as an additive in the insulating coating.

In the present embodiment, the electrical steel sheet having the insulating coating on the surface can be produced by using an electrical steel sheet having the composition described above, applying thereto a treatment solution containing the components described above, and then subjecting it to heating, and baking and drying.

In the present embodiment, there are no particular limitations on the coating method for application of the treatment solution to the surface of the electrical steel sheet. For example, a roll coater method may be used to apply the treatment solution to the surface of the electrical steel sheet, or a coating method such as a spray method or a dip method may be used to apply the solution to the surface of the electrical steel sheet.

Also, there are no particular limitations on the heating method for baking and drying the treatment solution. For example, it is possible to use a common radiation furnace or air heating furnace, or to use an induction heating method or a high-frequency heating method.

As for the conditions for baking and drying the treatment solution, for example, the heating temperature is preferably within a range of 200 to 380°C and the baking time preferably ranges from 15 to 60 seconds. If the heating temperature is less than 200°C, the moisture in the insulating coating cannot be removed thoroughly, and therefore such a temperature is not preferred. If the heating temperature is more than 380°C, the organic resin therein begins combusting, and therefore such a temperature is not preferred. Furthermore, if the baking time is less than 15 seconds, uniform heating is difficult and therefore such a baking time is not preferred, and if the baking time is more than 60 seconds, the industrial costs increase greatly, and therefore such a baking time is not preferred. Furthermore, in the case where the treatment solution contains a metal phosphate, the heating temperature is more preferably within a range of 260 to 330°C, and in the case where the treatment solution contains colloidal silica, the heating temperature is more preferably within a range of 200 to 300°C and even more preferably is within a range of 240 to 280°C.

Furthermore, additives such as a surfactant may be added to the treatment solution. Preferred examples of the surfactant include aliphatic polyoxyalkylene ether surfactants, and examples of other additives that may be added include brighteners, preservatives, and antioxidants.

In the present invention, the fluorine-containing compound is mainly present in the surface layer in the insulating coating and thereby imparts water and oil repellency to the surface of the insulating coating. However, if the surface is entirely coated with the fluorine-containing compound, a problem arises in that the compatibility with a coating composition decreases and therefore the coating adhesion decreases. For this reason, the present invention employs the specific range of fluorine concentration so that the surface coating by the fluorine-containing compound constitutes part of the coating. This configuration is believed to optimize the powder coating compatibility or electrodeposition coating compatibility of the insulating coating and also improve its corrosion resistance in wet environments.

### EXAMPLE

Firstly, a non-oriented electrical steel sheet was prepared which contained, by mass, Si: 2.4%, Al: 0.3%, Mn: 0.5%, and the balance: Fe and impurities and which had a sheet thickness of 0.35 mm.

Next, metal phosphate solutions were prepared using an orthophosphoric acid as metal phosphate in the following manner. Hydroxides, oxides, or carbonates of metals, e.g., Mg(OH)₂ and Al(OH)₃, were each dissolved in water together with the orthophosphoric acid so as to obtain a metal phosphate concentration of 40% by mass, and each solution was mixed and stirred.

In addition, as the inorganic salt or oxide, fine particles of titanium oxide, magnesium oxide, and zirconium hydroxide (mass average particle size of less than 1 µm) (commercial products) and aluminum surface modified 30 mass % colloidal silica with an average particle size of 15 nm (commercial product) were used. These inorganic salts or oxides were each dispersed in water so as to obtain a concentration of 40% by mass, and thereby inorganic solutions were prepared. It is believed that the hydroxide (zirconium hydroxide) was partially converted to an oxide (zirconium oxide) as a result of heating for application and drying.

As for the organic resins, the following 4 types of 40 mass % emulsions were used.

### (1) Acrylic Resin

An emulsion of an acrylic resin formed by copolymerizing 30% by mass of methyl methacrylate, 10% by mass of 2-hydroxyethyl methacrylate, 30% by mass of n-butyl acrylate, 10% by mass of a styrene monomer, and 20% by mass of isobutyl acrylate

### (2) Epoxy Resin

An emulsion of a carboxyl group modified epoxy resin formed by modifying bisphenol A with triethanolamine and reacting it with succinic anhydride

### (3) Polyester Resin

An emulsion of a carboxyl group-containing polyester resin formed by copolymerizing 35% by mass of dimethyl terephthalate and 35% by mass of neopentyl glycol and then graft polymerizing the copolymer with 15% by mass of fumaric acid and 15% by mass of trimellitic anhydride

Furthermore, as the fluorine-containing compound, compounds listed in Table 1 were each added and mixed so as to obtain a fluorine concentration shown in Table 1.

### [Table 1]

**Table 1**

| | Metal phosphate solution or inorganic solution | | Organic resin | | Fluorine-containing compound | | Fluorine concentration (ppm) |
|---|---|---|---|---|---|---|---|
| | Compound | Ratio [part by mass] | Compound | Ratio [part by mass] | Compound | Ratio [part by mass] | |
| Inventive Example 1 | Al(H₂PO₄)₃ | 100 | Acrylic Resin | 20 | A | 10 | 25 |
| Inventive Example 2 | MnH₂PO₄)₂ | 100 | Acrylic Resin | 40 | A | 20 | 3 |
| Example 3* | Al(H₂PO₄)₃ + Ni(H₂PO₄)₂ (70 :30) | 100 | Acrylic Resin | 5 | C | 30 | 45 |
| Example 4* | Al(H₂PO₄)₃ + colloidal silica (80 : 20) | 100 | - | - | c | 30 | 36 |
| Inventive Example 5 | TiO₂ | 100 | Polyester Resin | 70 | B | 30 | 130 |
| Inventive Example 6 | Colloidal silica | 100 | Epoxy Resin | 60 | E | 40 | 97 |
| Inventive Example 7 | Zr(OH)₂ + colloidal silica | 100 | Acrylic Resin | 20 | F | 10 | 6 |
| Inventive Example 8 | TiO₂ + Zr(OH)₂ (20 : 80) | 100 | Acrylic Resin | 30 | D | 10 | 9 |
| Inventive Example 9 | MgO + TiO₂ (50 : 50) | 100 | Acrylic Resin | 50 | D | 20 | 24 |
| Comparative Example 1 | Al(H₂PO₄)₃ | 100 | Acrylic Resin | 30 | - | - | - |
| Comparative Example 2 | Al(H₂PO₄)₃ + Zn(H₂PO₄)₂ (50 : 50) | 100 | Epoxy Resin | 60 | A | 100 | 240 |
| Comparative Example 3 | - | - | Acrylic Resin | 100 | B | 30 | 56 |
| Comparative Example 4 | Al(H₂PO₄)₃ | 100 | - | - | B | 50 | 220 |
| Reference Example | Magnesium chromate | 100 | Acrylic Resin | 30 | - | - | - |

| | | | | | | | |
|---|---|---|---|---|---|---|---|
| * Not in the scope of the invention | | | | | | | |

In Table 1, the letters "A" to "F" represent the following fluorine-containing compounds and the symbol "-" indicates that no such compound was used.
A: vinylidene fluoride-hexafluoropropylene
B: tetrafluoroethylene-vinyl ether low copolymer
C: salt of perfluorobutanesulfonic acid
D: perfluoroalkyl polyether low polymer
E: fluorine-modified silicone
F: chlorotrifluoroethylene low polymer

In Table 1, the metal ion fractions are mass fractions and the contents of the organic resins and the fluorine-containing compounds are based on the solids content.

Treatment solutions having mixing ratios shown in Table 1 were each applied to the surface of the electrical steel sheet having the composition described above, and baking was performed at drying temperatures shown in Table 2, so as to prepare electrical steel sheets of Examples 1 to 9, Comparative Examples 1 to 4, and Reference Example. A roll coater method was employed for the application of the treatment solution to the surface of the electrical steel sheet, and the amount of roll pressure and others were adjusted so as to obtain an insulating coating thickness of approximately 0.8 µm. The drying was performed using a radiation furnace. The end-point sheet temperatures and the baking times were adjusted so that the end-point sheet temperatures were within a range of 200 to 360°C and the baking times were within a range of 10 to 60 seconds, depending on the samples.

The fluorine concentration was analyzed by a combustion-ion chromatography method. The measurement was made by an analysis technique in accordance with a JIS method (JIS K0102) and using a commercially available ion chromatograph.

In the following, the method for evaluating the produced samples will be described in detail.

The insulating properties were evaluated as follows based on interlayer resistances measured in accordance with a JIS method (JIS C2550): less than 5 Ω.cm²/sheet as "×"; 5 Ω or more·cm²/sheet and less than 10 Q·cm²/sheet as "Δ"; 10 Ω or more·cm²/sheet and less than 50 Ω.cm²/sheet as "○"; and 50 or more Ω·cm²/sheet as "⊙". As for the insulating properties, samples evaluated as "⊙" or "○" were determined to be acceptable.

As for the adhesion, each steel sheet sample, with an adhesive tape attached thereto, was wound around metal bars of 10 mm, 20 mm, and 30 mm in diameter and then the adhesive tape was peeled off from each steel sheet sample, and evaluations were made based on the occurrence of delamination in the insulating coatings. Samples that did not have delamination in the insulating coating at the curvature of 10 mm φ were evaluated as "10 mm φ OK", samples that did not have delamination in the insulating coating at the curvature of 20 mm φ were evaluated as "20 mm φ OK", samples that did not have delamination in the insulating coating at the curvature of 30 mm φ were evaluated as "30 mm φ OK", and samples that had delamination in the insulating coating at the curvature of 30 mm φ were evaluated as "30 mm φ OUT". As for the adhesion, samples evaluated as "10 mm φ OK", "20 mm φ OK", or "30 mm φ OK" were determined to be acceptable.

Corrosion resistance in wet environments was evaluated in accordance with a JIS salt spray test (JIS Z2371). Firstly, a 5% NaCl aqueous solution was allowed to drop naturally onto each sample for 1 hour in an atmosphere at 35°C, and thereafter the sample was subjected to 5 cycles of holding, with one cycle including 3 hours of holding at a temperature of 60°C and a moisture content of 40% and 3 hours of holding at a temperature of 40°C and a moisture content of 95%. Subsequently, the area of rust was evaluated by a 10-point evaluation. The evaluation criteria are as follows. As for the corrosion resistance, samples evaluated as 7 or higher were determined to be acceptable.
10: No rust forming
9: Very slight rust forming (area fraction of not more than 0.1%)
8: Area fraction of rust = more than 0.1% and not more than 0.25%
7: Area fraction of rust = more than 0.25% and not more than 0.50%
6: Area fraction of rust = more than 0.50% and not more than 1%
5: Area fraction of rust = more than 1% and not more than 2.5%
4: Area fraction of rust = more than 2.5% and not more than 5%
3: Area fraction of rust = more than 5% and not more than 10%
2: Area fraction of rust = more than 10% and not more than 25%
1: Area fraction of rust = more than 25% and not more than 50%

As for the powder coating compatibility, firstly, a commercially available low temperature cure polyester powder coating solution was sprayed onto each sample using a tribo gun so as to obtain an average coating thickness of 50 µm, and each sample was heat cured at 160°C for 15 minutes. Subsequently, each coated sample was subjected to salt spraying over 100 hours and then a cross-cut adhesion test was conducted to evaluate the powder coating compatibility. In the cross-cut adhesion test, samples in which the powder coating did not delaminate were evaluated as "⊙", samples in which the powder coating slightly delaminated were evaluated as "○", samples in which the powder coating partially delaminated but adhered were evaluated as "Δ", and samples in which the powder coating was corroded and had blistering were evaluated as "×". As for the powder coating compatibility, samples evaluated as "⊙" or "○" were determined to be acceptable.

As for the electrodeposition coating, firstly, a surface pretreatment was performed using a commercially available degreasing solution, and then, a high weatherability electrodeposition coating solution of epoxy-acrylic type was applied onto each sample in a bath at 25°C so as to obtain an average coating thickness of 20 µm. The coated samples were rinsed with water to clean off an excess of the coating composition and then heat dried at 160°C for 20 minutes. Subsequently, each coated sample was subjected to salt spraying over 80 hours and then a cross-cut adhesion test was conducted to evaluate the electrodeposition coating compatibility. In the cross-cut adhesion test, samples in which the electrodeposition coating did not delaminate were evaluated as "⊙", samples in which the electrodeposition coating slightly delaminated were evaluated as "○", samples in which the electrodeposition coating partially delaminated but adhered were evaluated as "Δ", and samples in which the electrodeposition coating was corroded and had blistering were evaluated as "×". As for the electrodeposition coating compatibility, samples evaluated as "⊙" or "○" were determined to be acceptable.

As for aqueous coating compatibility, firstly, a commercially available acrylic resin aqueous coating composition was sprayed to obtain an average coating thickness of 10 µm, and then the coating was dried at room temperature and visually evaluated. Samples in which the aqueous coating was glossy and uniform were evaluated as "5", samples in which the aqueous coating was glossy but slightly less uniform were evaluated as "4", samples in which the aqueous coating was less uniform but was totally applied were evaluated as "3", samples in which the aqueous coating was less uniform and partially thin were evaluated as "2", and samples in which the aqueous coating was entirely non-uniform were evaluated as "1". As for the aqueous coating compatibility, samples evaluated as "3" or higher were determined to be acceptable.

As for the appearance, samples whose insulating coating was glossy, smooth, and uniform were evaluated as "5", samples whose insulating coating was glossy but slightly less uniform were evaluated as "4", samples whose insulating coating was somewhat glossy and smooth but less uniform were evaluated as "3", samples whose insulating coating was less glossy, somewhat less smooth, and less uniform were evaluated as "2", and samples whose insulating coating was less glossy, less uniform, and less smooth were evaluated as "1". As for the appearance, samples evaluated as "4" or higher were determined to be acceptable.

As for the thermal resistance, after the electrical steel sheet was subjected to stress relief annealing at 750°C for 2 hours in a nitrogen atmosphere, the surface thereof was rubbed with a gauze measuring 2 mm × 30 mm at a loading of 100 gf (approximately 0.98 N), and then evaluations were made based on the occurrence of delamination in the insulating coating. Samples that did not have delamination after rubbing with the gauze were evaluated as "5", samples that had slight delamination were evaluated as "4", samples that had apparent delamination were evaluated as "3", samples that had severe delamination were evaluated as "2", and samples that had delamination even without rubbing with the gauze were evaluated as "1". As for the thermal resistance, samples evaluated as "4" or higher were determined to be acceptable.

The above results of evaluations of the electrical steel sheets are summarized in Table 2.

### [Table 2]

**Table 2**

| Test No. | Insulating properties | Adhesion | Corrosion resistance | Powder coating compatibility | Electrodeposition coating compatibility | Aqueous coating compatibility | Appearance | Thermal resistance |
|---|---|---|---|---|---|---|---|---|
| Inventive Example 1 | ⊙ | 20mm φ OK | 10 | ○ | ⊙ | 5 | 5 | 5 |
| Inventive Example 2 | ⊙ | 20mm φ OK | 10 | ⊙ | ⊙ | 5 | 5 | 5 |
| Example 3 * | ○ | 20mm φ OK | 10 | ○ | ○ | 4 | 4 | 5 |
| Example 4 * | ○ | 20mm φ OK | 7 | ⊙ | ⊙ | 4 | 5 | 5 |
| Inventive Example 5 | ⊙ | 20mm φ OK | 9 | ⊙ | ○ | 3 | 4 | 4 |
| Inventive Example 6 | ○ | 20mm φ OK | 7 | ○ | ○ | 3 | 5 | 4 |
| Inventive Example 7 | ○ | 20mm φ OK | 8 | ○ | ○ | 5 | 4 | 4 |
| Inventive Example 8 | ○ | 20mm φ OK | 9 | ○ | ○ | 5 | 4 | 5 |
| Inventive Example 9 | ⊙ | 30mm φ OK | 7 | O | ○ | 5 | 4 | 5 |
| Comparative Example 1 | ○ | 20mm φ OK | 7 | Δ | × | 5 | 3 | 4 |
| Comparative Example 2 | ○ | 30mm φ OUT | 8 | Δ | Δ | 2 | 4 | 4 |
| Comparative Example 3 | ⊙ | 30mm φ OK | 2 | ○ | ○ | 3 | 2 | 4 |
| Comparative Example 4 | ○ | 30mm φ OUT | 9 | Δ | Δ | 2 | 5 | 4 |
| Reference Example | ○ | 20mm φ OK | 8 | ○ | ○ | 5 | 5 | 5 |

| | | | | | | | | |
|---|---|---|---|---|---|---|---|---|
| * Not in the scope of the invention | | | | | | | | |

Reference to the results shown in Table 2 clarifies the advantageous effects of the present invention.

The results in Table 2 demonstrate that Examples 1, 2 and 5 to 9 of the present invention as well as Examples 3 and 4 have excellent powder coating compatibility, electrodeposition coating compatibility, and aqueous coating compatibility. The results also demonstrate that Examples 1, 2 and 5 to 9 of the present invention as well as Examples 3 and 4 have excellent insulating properties, adhesion, corrosion resistance, appearance, and thermal resistance, in addition to excellent powder coating compatibility, electrodeposition coating compatibility, and aqueous coating compatibility. Specifically, it is seen that Examples 1 to 9 have insulating properties, adhesion, corrosion resistance, powder coating compatibility, electrodeposition coating compatibility, aqueous coating compatibility, appearance, and thermal resistance that are comparable to or better than those of Reference Example, which includes a chromium compound-containing insulating coating.

On the other hand, with regard to Comparative Examples 1 to 4, most of them have low powder coating compatibility, electrodeposition coating compatibility, and aqueous coating compatibility, and none of them are excellent in all the categories of insulating properties, adhesion, corrosion resistance, powder coating compatibility, electrodeposition coating compatibility, appearance, and thermal resistance.

Specifically, it is seen that Comparative Example 1, which does not include a fluorine-containing compound, has low powder coating compatibility and electrodeposition coating compatibility, and also does not have a good appearance. Furthermore, it is seen that Comparative Example 2, which has a fluorine concentration higher than the range of the present invention, has low powder coating compatibility, electrodeposition coating compatibility, and aqueous coating compatibility and also has low adhesion. Furthermore, it is seen that Comparative Example 3, which does not contain an inorganic salt or oxide, or, a metal phosphate, has poor corrosion resistance and appearance. Furthermore, it is seen that Comparative Example 4, which does not include an organic resin, has low powder coating compatibility, electrodeposition coating compatibility, and aqueous coating compatibility, and also has low adhesion.

As described in the foregoing, the electrical steel sheet according to the embodiment of the present invention shows good coating compatibility for powder coating, electrodeposition coating, and aqueous coating for production of laminate iron cores, and the insulating coating shows good properties for the electrical steel sheet.

In the foregoing description, a preferred embodiment of the present invention has been described in detail, but the present invention is not limited to such examples. It will be apparent that those having general knowledge in the field to which the present invention belongs may find various alternations and modifications within the scope of the technical ideas described in the appended claims, and it should be understood that they will naturally come under the technical scope of the present invention.

## Claims

1. An electrical steel sheet having an insulating coating on a steel sheet surface, wherein the insulating coating comprises one or more selected from an inorganic salt, an oxide and an organic resin, wherein
the insulating coating contains, based on a total mass of the insulating coating, 50% or more by mass in total of: the inorganic salt and/or the oxide,
contains a fluorine-containing compound, which has a molecular weight of not more than 100,000 in an amount of 0.3 to 50 parts by mass based on 100 parts by mass of the total solid content of an inorganic material, an oxide, and an organic resin,
the fluorine-containing compound being one or more selected from the group consisting of chlorotrifluoroethylene low polymers, perfluoropolyether low polymers, perfluoroalkyl polyether low polymers, fluorine-modified silicones, vinylidene fluoride-tetrafluoroethylene copolymers, vinylidene fluoride-hexafluoropropylene copolymers, and vinylidene fluoride-hexafluoropropylene-tetrafluoroethylene copolymers,
has a fluorine concentration ranging from 2 ppm to 130 ppm, and
is free of a chromium compound.

2. The electrical steel sheet according to claim 1, wherein the insulating coating contains, based on a total mass of the insulating coating, 50% or more by mass in total of: a metal phosphate, and; one selected from, or a mixture or a copolymer of two or more selected from an acrylic resin, an epoxy resin, and a polyester resin.

3. The electrical steel sheet according to claim 1, wherein the insulating coating contains, based on a total mass of the insulating coating, 50% or more by mass in total of: the oxide, and; one selected from, or a mixture or a copolymer of two or more selected from an acrylic resin, an epoxy resin, and a polyester resin.

4. The electrical steel sheet according to claim 2, wherein the insulating coating contains, based on a total mass of the insulating coating, 50% or more by mass in total of:
100 parts by mass of the metal phosphate including one or more metal elements selected from aluminum, zinc, calcium, cobalt, strontium, zirconium, titanium, nickel, barium, magnesium and manganese, and;
1 to 50 parts by mass of one selected from, or a mixture or a copolymer of two or more selected from the acrylic resin, the epoxy resin, and the polyester resin.

5. The electrical steel sheet according to claim 3, wherein the insulating coating contains, based on a total mass of the insulating coating, 50% or more by mass in total of:
100 parts by mass of the oxide including one or more selected from colloidal silica, zinc oxide, calcium oxide, cobalt oxide, zirconium oxide, titanium oxide and magnesium oxide and;
1 to 100 parts by mass of one selected from, or a mixture or a copolymer of two or more selected from the acrylic resin, the epoxy resin, and the polyester resin.

## Patentansprüche

1. Elektrostahlblech mit einer isolierenden Beschichtung auf einer Stahlblechoberfläche, wobei die isolierende Beschichtung ein oder mehrere aus einem anorganischen Salz, einem Oxid und einem organischen Harz ausgewählte Elemente umfasst, wobei
die isolierende Beschichtung beruhend auf einer Gesamtmasse der isolierenden Beschichtung insgesamt 50 Masse-% oder mehr von Folgendem enthält: dem anorganischen Salz und/oder dem Oxid,
eine fluorhaltige Verbindung enthält, die ein Molekulargewicht von nicht mehr als 100.000 in einer Menge von 0,3 bis 50 Massenteilen, beruhend auf 100 Massenteilen des Gesamtfeststoffgehalts eines anorganischen Materials, eines Oxids und eines organischen Harzes, aufweist,
wobei die fluorhaltige Verbindung eine oder mehrere ausgewählt aus der Gruppe bestehend aus Chlortrifluorethylen-Niedrigpolymeren, Perfluorpolyether-Niedrigpolymeren, Perfluoralkylpolyether-Niedrigpolymeren, fluormodifizierten Silikonen, Vinylidenfluorid-Tetrafluorethylen-Copolymeren, Vinylidenfluorid-Hexafluorpropylen-Copolymeren und Vinylidenfluorid-Hexafluorpropylen-Tetrafluorethylen-Copolymeren ist,
eine Fluorkonzentration in einem Bereich von 2 ppm bis 130 ppm aufweist, und
frei von einer Chromverbindung ist.

2. Elektrostahlblech nach Anspruch 1, wobei die isolierende Beschichtung beruhend auf einer Gesamtmasse der isolierenden Beschichtung insgesamt 50 Masse-% oder mehr von Folgendem enthält: einem Metallphosphat, und; ein ausgewähltes Element aus oder eine Mischung oder ein Copolymer von zwei oder mehreren, ausgewählt aus einem Acrylharz, einem Epoxidharz und einem Polyesterharz enthält.

3. Elektrostahlblech nach Anspruch 1, wobei die isolierende Beschichtung beruhend auf einer Gesamtmasse der isolierenden Beschichtung insgesamt 50 Masse-% oder mehr von Folgendem enthält: dem Oxid, und; ein ausgewähltes Element aus oder eine Mischung oder ein Copolymer von zwei oder mehreren, ausgewählt aus einem Acrylharz, einem Epoxidharz und einem Polyesterharz enthält.

4. Elektrostahlblech nach Anspruch 2, wobei die isolierende Beschichtung beruhend auf einer Gesamtmasse der isolierenden Beschichtung insgesamt 50 Masse-% oder mehr von Folgendem enthält:
100 Massenteile des Metallphosphats einschließlich eines oder mehrerer Metallelemente, die ausgewählt sind aus Aluminium, Zink, Kalzium, Kobalt, Strontium, Zirkonium, Titan, Nickel, Barium, Magnesium und Mangan, und
1 bis 50 Masseteile von einem ausgewählten Element aus oder einer Mischung oder einem Copolymer von zwei oder mehreren, ausgewählt aus dem Acrylharz, dem Epoxidharz und dem Polyesterharz.

5. Elektrostahlblech nach Anspruch 3, wobei die isolierende Beschichtung beruhend auf einer Gesamtmasse der isolierenden Beschichtung insgesamt 50 Masse-% oder mehr von Folgendem enthält:
100 Massenteile des Oxids einschließlich eines oder mehrerer ausgewählter Elemente von kolloidalem Siliciumdioxid, Zinkoxid, Kalziumoxid, Kobaltoxid, Zirkoniumoxid, Titanoxid und Magnesiumoxid und;
1 bis 100 Massenteile von einem ausgewählten Element aus oder einer Mischung oder einem Copolymer von zwei oder mehreren, ausgewählt aus dem Acrylharz, dem Epoxidharz und dem Polyesterharz.

## Revendications

1. Tôle d'acier électrique ayant un revêtement isolant sur une surface de tôle d'acier, dans laquelle le revêtement isolant comprend un ou plusieurs choisis parmi un sel inorganique, un oxyde et une résine organique, dans laquelle
le revêtement isolant contient, sur la base d'une masse totale du revêtement isolant, 50% ou plus en masse au total du : sel inorganique et / ou de l'oxyde,
contient un composé contenant du fluor, dont le poids moléculaire ne dépasse pas 100 000 en une quantité de 0,3 à 50 parties en masse sur la base de 100 parties en masse de la teneur en solides totale d'un matériau inorganique, d'un oxyde et d'une résine organique,
le composé contenant du fluor étant un ou plusieurs choisis dans le groupe constitué par les bas polymères chlorotrifluoroéthylène, les bas polymères perfluoropolyéther, les bas polymères perfluoroalkyl polyéther, les silicones modifiées au fluor, les copolymères de fluorure de vinylidène-tétrafluoroéthylène, les copolymères de fluorure de vinylidène-hexafluoropropylène et les copolymères de fluorure de vinylidène-hexafluoropropylène-tétrafluoroéthylene,
a une concentration en fluor allant de 2 ppm à 130 ppm, et
est exempt de composé de chrome.

2. Tôle d'acier électrique selon la revendication 1, dans laquelle le revêtement isolant contient, sur la base d'une masse totale du revêtement isolant, 50% ou plus en masse au total :
d'un phosphate métallique, et ; une choisie parmi, ou un mélange ou un copolymère de deux ou plusieurs choisies parmi une résine acrylique, une résine époxy et une résine polyester.

3. Tôle d'acier électrique selon la revendication 1, dans laquelle le revêtement isolant contient, sur la base d'une masse totale du revêtement isolant, 50% ou plus en masse au total de :
l'oxyde, et ; une choisie parmi, ou un mélange ou un copolymère de deux ou plusieurs choisies parmi une résine acrylique, une résine époxy et une résine polyester.

4. Tôle d'acier électrique selon la revendication 2, dans laquelle le revêtement isolant contient, sur la base d'une masse totale du revêtement isolant, 50% ou plus en masse au total de :
100 parties en masse de phosphate métallique dont un ou plusieurs éléments métalliques choisis parmi l'aluminium, le zinc, le calcium, le cobalt, le strontium, le zirconium, le titane, le nickel, le baryum, le magnésium et le manganèse, et ;
1 à 50 parties en masse de l'une choisie parmi, ou un mélange ou un copolymère de deux ou plusieurs choisies parmi la résine acrylique, la résine époxy et la résine polyester.

5. Tôle d'acier électrique selon la revendication 3, dans laquelle le revêtement isolant contient, sur la base d'une masse totale du revêtement isolant, 50% ou plus en masse au total de :
100 parties en masse de l'oxyde dont un ou plusieurs choisis parmi la silice colloïdale, l'oxyde de zinc, l'oxyde de calcium, l'oxyde de cobalt, l'oxyde de zirconium, l'oxyde de titane et l'oxyde de magnésium et;
1 à 100 parties en masse de l'une choisie parmi, ou un mélange ou un copolymère de deux ou plusieurs choisies parmi la résine acrylique, la résine époxy et la résine polyester.
